# EUROPÄISCHE PATENTSCHRIFT

(11) **EP 2 558 265 B1**
(45) Veröffentlichungstag und Bekanntmachung des Hinweises auf die Patenterteilung: **06.04.2016**
(21) Anmeldenummer: 11718273.3
(22) Anmeldetag: 08.04.2011
(51) Int. Cl.: B29C 45/00, B29C 45/26

(54) **VERFAHREN ZUM HERSTELLEN VON RINGFÖRMIGEN, ZUG- ODER DRUCKBELASTETEN FORMKÖRPERN AUS KUNSTSTOFF UND ARMATUR FÜR UNTER DRUCK STEHENDE FLUIDE**
METHOD FOR PRODUCING ANNULAR MOLDINGS SUBJECTED TO TENSILE OR PRESSURE LOADING FROM PLASTIC AND FAUCET FOR FLUID UNDER PRESSURE
PROCÉDÉ DE FABRICATION DE PIÈCES MOULÉES ANNULAIRES EN MATIÈRE PLASTIQUE SOLLICITÉE EN TRACTION OU EN COMPRESSION ET ROBINETTERIE POUR FLUIDE SOUS PRESSION

(30) Priorität: 10.04.2010 DE 202010004839 U; 10.04.2010 DE 102010014487
(43) Veröffentlichungstag der Anmeldung: 20.02.2013
(73) Patentinhaber: Sensus Spectrum LLC, Raleigh NC 27615 (US)
(72) Erfinder: BUSCH, Dieter, 30982 Pattensen (DE); FRISTER, Mark, 30173 Hannover (DE)
(74) Vertreter: Patentanwälte Dr. Keller, Schwertfeger
(86) Internationale Anmeldenummer: PCT/EP2011/001767
(87) Internationale Veröffentlichungsnummer: WO 2011/124389

(56) Entgegenhaltungen:
- EP-A1- 0 879 687
- WO-A2-2007/028567
- JP-A- 11 090 961
- JP-U- 59 107 223
- US-A- 2 191 703

## Beschreibung

### Technisches Gebiet:

Die Erfindung betrifft Verfahren zum Herstellen von ringförmigen, zug- oder druckbelasteten Formkörpern aus Kunststoff gemäß dem Oberbegriff des Anspruchs 1 sowie eine Armatur für unter Druck stehende Fluide gemäß dem Oberbegriff des Anspruchs 8.

### Stand der Technik:

Die DE 10 2005 042 579 A1, die DE 37 32 703 A1 und die DE 37 40 531 A1 zeigen Verbundwasserzähler, deren Gehäuse eine obere Öffnung besitzen, durch die die messtechnischen Einbauten sich einsetzen und entnehmen lassen. Der druckdichte Verschluss der oberen Öffnung erfolgt durch einen Druckdeckel, der mit Hilfe von Befestigungsschrauben mit dem Gehäuse lösbar verbunden ist. Zwecks Druckfestigkeit besteht der Druckdeckel aus Metall. Das Messwerk sitzt auf dem Druckdeckel. Wenn der Druckdeckel amagnetisch ausgeführt ist, z. B. aus Messing, kann die Rotation der Turbine mit Hilfe von Permanentmagneten zum Messwerk übertragen werden.

Aus den verschiedensten Gründen wird seit vielen Jahren versucht, die mit Trinkwasser in Berührung kommenden Armaturen nicht mehr aus Metall, insbesondere nicht mehr aus Messing herzustellen, sondern aus Kunststoff. Kunststoffe haben jedoch einige Eigenschaften, die eine besondere Anpassung an diese Verwendung nötig machen. Zum einen sind Kunststoffe deutlich weniger stabil als Metalle. Des Weiteren neigen Kunststoffe dazu, unter der Einwirkung von Dauerdruck- oder Dauerzugkräften nachzugeben. Des Weiteren diffundiert Wasser in die Kunststoffe ein und reduziert deren Festigkeit zusätzlich. Müssen aufgrund erhöhter Festigkeitsanforderungen die Kunststoffe mit Glas- oder Keramikfasern verstärkt werden, wird dadurch der Spritzvorgang erschwert.

Schließlich hat sich herausgestellt, dass die Art und Weise, wie sich die in die Spritzgussform eingespritzte Kunststoffschmelze darin verteilt und an welcher Stelle die sogenannten Bindenähte liegen, ausschlaggebend für die Festigkeit des fertigen Formkörpers ist. Spritzgussteile, bei denen die Bindenähte unglücklich positioniert sind, haben deutlich reduzierte Festigkeitswerte. Das ist unbefriedigend.

Bindenähte entstehen, wenn abgekühlte Fließfronten des in die Spritzgussform eingespritzten Kunststoffs aufeinandertreffen und sich deshalb nicht genügend stoffschlüssig verbinden können. Umfließt die Kunststoffschmelze beim Füllvorgang beispielsweise einen Kern, so kühlt die Schmelze an der Kernoberfläche ab, was zu einer starken Schwächung der Bindenaht führt.

Die Technik kennt einige Verfahren, um die Bindenahtqualität zu verbessern.

Eine erste Methode beruht darauf, die Fließfront gezielt aufzuheizen. So kann z.B. ein von der Kunststoffschmelze umflossener Kern beheizt werden, um das Abkühlen der Schmelze zu verringern oder zu vermeiden. Des Weiteren ist es bekannt, die Werkzeugoberfläche im Bereich der Bindenaht zum Zeitpunkt der Füllung kurzzeitig aufzuheizen. Dadurch wird die Schmelzfront erweicht und eine bessere Durchmischung des Materials im Bereich der Fließfront erreicht. Allerdings kann dadurch die Zykluszeit verlängert werden.

Bei Formteilen, die über mehrere Angüsse gleichzeitig gespritzt werden, lassen sich Bindenähte nicht vermeiden, da die verschiedenen Schmelzströme am Fließwegende aufeinanderstoßen. Durch den Einsatz des sogenannten Kaskaden-Spritzgießens wird die Kavität zu Beginn der Füllphase nur über eine Angussdüse gefüllt. Überströmt die Schmelzfront den nächsten Abschnitt, so wird die nächste Düse geöffnet und neue Schmelze in den vorhandenen Schmelzstrom eingespritzt. So können in mehreren Düsen große Fließwege überbrückt werden, ohne dass kalte Fließfronten aufeinanderstoßen. Allerdings ist eine aufwändige Steuerung der Angussdüsen nötig und die Zykluszeit wird verlängert.

Eine Verbesserung des Kaskaden-Spritzgießens lässt sich erreichen durch Verwendung entsprechend gesteuerter Heißkanaldüsen. Dazu wird die Kavität zunächst über alle Düsen gefüllt. Kurz vor der vollständigen Füllung oder während einer Nachdruckphase wird die restliche Kavität von nur noch einer Düse gefüllt. Dies führt zu einer Durchströmung des Bindenahtbereiches zwischen den Düsen. Auch hier ist eine aufwändige Steuerung der Angussdüsen nötig.

Eine weitere bekannte Möglichkeit, die Bindenahtqualität eines Formteils zu verbessern, ist das sogenannte Gegentakt-Spritzgießen. Dabei wird die Kavität über zwei Spritzaggregate gefüllt, die voneinander unterschiedlich angesteuert werden können. Nach der Füllung durch beide Aggregate wird die Schnecke des einen Aggregats zurückgezogen, während das andere Aggregat weiter einspritzt. Dadurch wird der noch flüssige Kern der Bindenaht verschoben. Da für diese Vorgehensweise mehrere Spritzaggregate mit einer entsprechenden Steuerung notwendig sind, ist dieses Verfahren sehr aufwändig. US-A-2 191 703 offenbart ein Verfahren gemäß dem Oberbegriff des Anspruchs 1. WO-A-2007/028567 offenbart eine Armatur für unter Druck stehende Fluide.

In allen Fällen wird versucht, die Bindenaht zu durchströmen, um ihre mechanischen Eigenschaften zu verbessern. Dabei wird nach dem Zusammentreffen der Fließfronten der plastische Kern der Bindenaht verschoben. Die im Querschnitt sonst eben verlaufende Bindenaht wird dadurch parabelförmig und ähnelt einer Nut-Feder-Verbindung. Am besten aber auch am aufwändigsten lässt sich dies durch die oben beschriebenen Verfahren Kaskaden-Spritzgießen und Gegentakt-Spritzgießen erreichen, die jedoch sehr aufwändig sind.

### Darstellung der Erfindung:

Der vorliegenden Erfindung liegt die Aufgabe zugrunde, ein Verfahren zum Herstellen von Formteilen unter Verwendung einer Spritzgussform mit einer Haupt-Kavität, in der das Formteil geformt wird, und wenigstens einem Kern anzugeben.

Diese Aufgabe wird gelöst durch Verfahren mit den Merkmalen des Patentanspruchs 1.

Die vorliegende Erfindung beruht darauf, ein Durchströmen der Bindenaht zu ermöglichen, indem an den besonders kritischen Stellen Extra-Kavitäten bereitgestellt werden, in die Kunststoffschmelze hineinfließen kann, wobei der Kern der Bindenähte von heißer Kunststoffschmelze durchflossen wird und die oben erwähnte Parabelform entsteht.

Ein weiterer Vorteil des erfindungsgemäßen Verfahrens ist, dass durch geschicktes Positionieren der Extra-Kavitäten die Richtung der Fasern von faserverstärkten Kunststoffen gesteuert werden kann, z. B. parallel zueinander und senkrecht zur Kraftrichtung, wodurch die Druckfestigkeit des Kunststoffformteils erheblich gesteigert wird. Dabei werden nahezu die Eigenschaften des homogenen faserverstärkten Kunststoffs erreicht.

Die dabei entstehenden Extra-Formkörper können anschließend entfernt werden. Gegebenenfalls können diese Zusatzformkörper jedoch auch sinnvolle Funktionen erfüllen, bei denen es nicht auf Festigkeit ankommt.

Eine typische Anwendung des erfindungsgemäßen Verfahrens sind Armaturen für druckbeaufschlagte Formkörper der Wasserinstallation, z. B. Gehäuse, Druckdeckel und Klemmringe von Wasserverbrauchszählern. Wesentlicher Vorteil hierbei ist, dass Gehäuse und/oder Druckplatte aus Kunststoff bestehen. Kunststoff ist amagnetisch, so dass die Drehungen des Messorgans mit Hilfe von Permanentmagneten auf das Messwerk übertragen werden können. Außerdem übt der Kunststoff keinen nachteiligen Einfluss auf das zu messende Fluid, insbesondere Wasser, aus.

Zur Verbesserung der mechanischen Stabilität eines Formkörpers hat es sich als vorteilhaft erwiesen, dass die Bindenaht seitlich versetzt zum Verbindungskanal gebildet wird. Insbesondere ist es von Vorteil, dass die Bindenaht in einem Abschnitt des Formkörpers gebildet wird, der bei bestimmungsgemäßer Verwendung des Formkörpers in einem Bereich liegt, der mechanisch gering belastet ist.

Vorzugsweise wird ein Kunststoff-Einspritzpunkt in der Spritzgussform so positioniert, dass sich wenigstens eine Bindenaht in der Nähe des Verbindungskanals bildet.

Werden mehrere Kunststoff-Einspritzpunkte eingesetzt, werden diese so positioniert, dass sich die Bindenähte in der Nähe der Verbindungskanäle bilden.

Vorteilhafterweisen werden die mehreren Einspritzpunkte so angesteuert, dass die Bindenähte sich während des Einspritzens der Kunststoffschmelze neben den Verbindungskanälen bilden und dass bei der anschließenden Druckerhöhung Kunststoffschmelze in die Extra-Kavitäten fließt; wobei die beim Füllen der Haupt-Kavität entstandenen Bindenähte durchströmt werden.

Der vorliegenden Erfindung liegt weiterhin die Aufgabe zugrunde, eine Armatur für unter Druck stehende Fluide, insbesondere Wasser, mit einem Klemmring anzugeben, wobei der Klemmring aus Kunststoff besteht und eine hohe Festigkeit aufweist.

Diese Aufgabe wird gelöst durch eine Armatur mit den Merkmalen des Schutzanspruchs 8.

Dank der besonderen Form des Klemmrings mit den über Stiele angebundenen Extra-Formkörpern lassen sich hoch belastete Kunststoffformteile ohne schwächende Bindenähte und mit optimalem Verlauf von Verstärkungsfasern herstellen. Die dabei entstandenen Extra-Körper und Stiele können anschließend entfernt werden. Gegebenenfalls können diese Zusatzformkörper jedoch auch sinnvolle Funktionen erfüllen, bei denen es nicht auf Festigkeit ankommt.

Vorzugsweise umfasst die Armatur ein Gehäuse mit einer Öffnung und einen Druckdeckel, der die Öffnung mit Befestigungsvorrichtungen lösbar verschließt, wobei der Druckdeckel eine Abdichtplatte und den Klemmring umfasst, wobei die Abdichtplatte einen umlaufenden Randflansch besitzt, die Abdichtplatte aus Kunststoff gespritzt ist und der Klemmring die Abdichtplatte auf das Gehäuse klemmt.

Gemäß einer bevorzugten Ausgestaltung der Erfindung ist der Randflansch der Abdichtplatte nach außen abgeschrägt und der Klemmring dazu passend geformt. Diese Abschrägung sorgt dafür, dass der Druck, der von unten gegen die Abdichtplatte drückt, im Druckring Zugspannungen auslöst. Dank des Einfließens der Kunststoffschmelze in die Extraformkörper werden jedoch im Kunststoff enthaltene Verstärkungsfasern auch im Bereich der durchströmten Bindenaht genau richtig orientiert.

Ein wesentlicher Vorteil ist, dass die Abdichtplatte aus Kunststoff besteht. Kunststoff ist amagnetisch, so dass die Drehungen der Turbine mit Hilfe von Permanentmagneten auf das Messwerk übertragen werden können. Außerdem übt der Kunststoff keinen nachteiligen Einfluss auf das zu messende Fluid, insbesondere Wasser, aus, wenn ein lebensmittelechtes Material gewählt wird.

Eine typische Anwendung der erfindungsgemäßen Armatur mit dem erfindungsgemäßen Klemmring sind Wasserzähler, z. B. Verbundwasserzähler mit einem Gehäuse, das eine seitliche, durch einen Druckdeckel zu verschließende Öffnung besitzt.

### Kurze Beschreibung der Zeichnungen:

Anhand der Zeichnung soll die Erfindung in Form eines Ausführungsbeispiels näher erläutert werden. Es zeigen jeweils rein schematisch
- Fig. 1: eine erste Spritzgussform zur Herstellung eines ringförmigen, zug- oder druckbelastbaren Formkörpers aus Kunststoff,
- Fig. 2: eine zweite Spritzgussform zur Herstellung eines ringförmigen, zug- oder druckbelastbaren Formkörpers aus Kunststoff,
- Fig. 3: als Perspektive einen ringförmigen, zug- oder druckbelastbaren Formkörper,
- Fig. 4: einen Längsschnitt durch einen Turbinenzähler,
- Fig. 5: eine perspektivische Ansicht einer Kombination aus Abdichtplatte und Klemmring und
- Fig. 6: eine dritte Spritzgussform zur Herstellung eines ringförmigen, zug- oder druckbelastbaren Formkörpers aus Kunststoff.

### Ausführliche Darstellung der Ausführungsbeispiele:

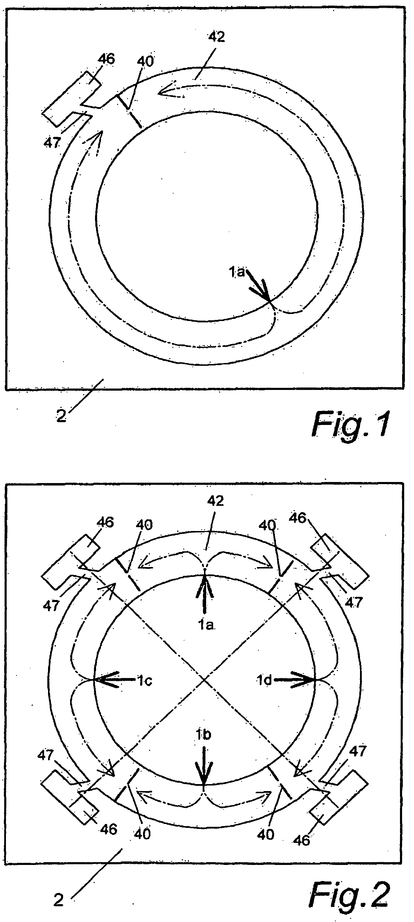

Fig. 1 zeigt rein schematisch eine erste Spritzgussform 2 mit einer Haupt-Kavität 42 zur Herstellung eines ringförmigen, zug- oder druckbelastbaren Formkörpers aus Kunststoff. Die Kunststoffschmelze wird an einem Einspritzpunkt 1a in die Haupt-Kavität 42 eingespritzt und fließt mehr oder weniger gleichmäßig nach rechts und links. Dort, wo sich die beiden Teilströme treffen, entsteht eine Bindenaht 40. Da sich die Fronten der beiden Teilströme inzwischen etwas abgekühlt haben, besteht die Gefahr, dass die Bindenaht 40 eine deutlich reduzierte Festigkeit hat.

Um dies zu verhindern, ist in die Spritzgussform 2 eine Extra-Kavität 46 eingearbeitet, die mit der Haupt-Kavität 42 über einen Verbindungskanal 47 verbunden ist. Die Extra-Kavität 46 ist zur Bindenaht 40 seitlich versetzt. Querschnitt und/oder Richtung des Verbindungskanals 47 sind so gewählt, dass zunächst keine Kunststoffschmelze in den Verbindungskanal 47 eintritt. Dies geschieht erst, wenn der Spritzdruck erhöht wird, d. h. in der sog. Nachdrückphase. Während Kunststoffschmelze in die Extra-Kavität 46 eintritt, wird die Bindenaht 40 durchströmt und es bildet sich die oben erwähnte parabelartige Fließfront.

Fig. 2 zeigt die Verhältnisse bei einer zweiten Spritzgussform 2, wenn die Kunststoffschmelze an vier Einspritzpunkten 1a, 1b, 1c, 1d in die Haupt-Kavität 42 eingespritzt wird. Dabei wird über die Einspritzpunkte 1a und 1b zunächst weniger Material eingespritzt als an den Einspritzpunkten 1c und 1d, um die Bindenähte 40 auf die gewünschte Seite neben die Verbindungskanäle 47 zu den Extra-Kavitäten 46 zu legen. Während der Nachdrückphase wird der Spritzdruck an den Einspritzpunkten 1a und 1 b erhöht, so dass die Bindenähte 40 durchströmt werden, während sich die Extra-Kavitäten 46 füllen.

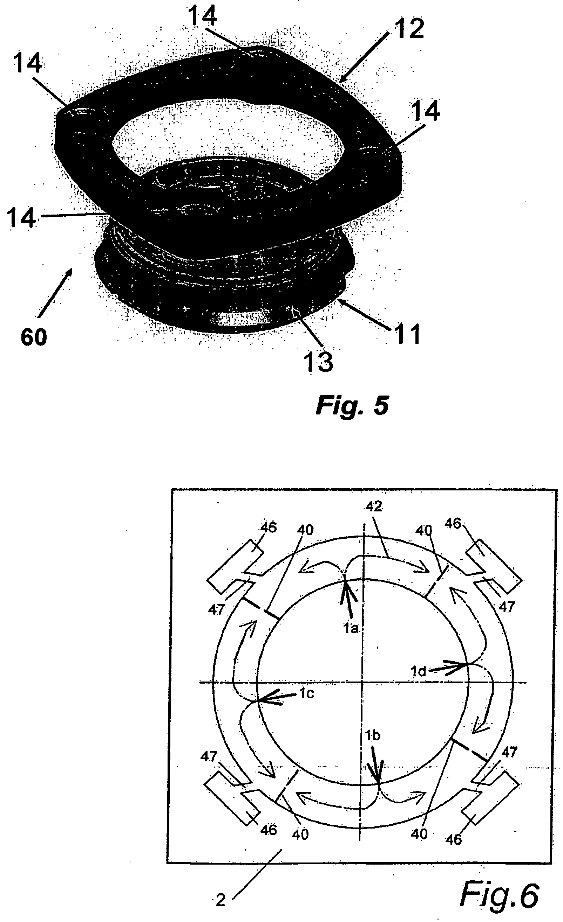

Bei einer in Figur 6 dargestellten dritten Spritzgussform 2 wird über die vier Einspritzpunkte 1 a, 1 b, 1 c, 1 d jeweils gleich viel Material der Kunststoffschmelze in die Haupt-Kavität 42 eingespritzt. Die Position der Einspritzpunkte 1 a, 1 b, 1 c, 1 d ist so gewählt, dass die Bindenähte 40 auf der gewünschten Seite neben die Verbindungskanäle 47 zu den Extra-Kavitäten 46 zu liegen kommen. Während der Nachdrückphase wird der Spritzdruck an allen Einspritzpunkten 1 a, 1 b, 1c, 1 d erhöht, so dass die Bindenähte 40 durchströmt werden, während sich die Extra-Kavitäten 46 füllen.

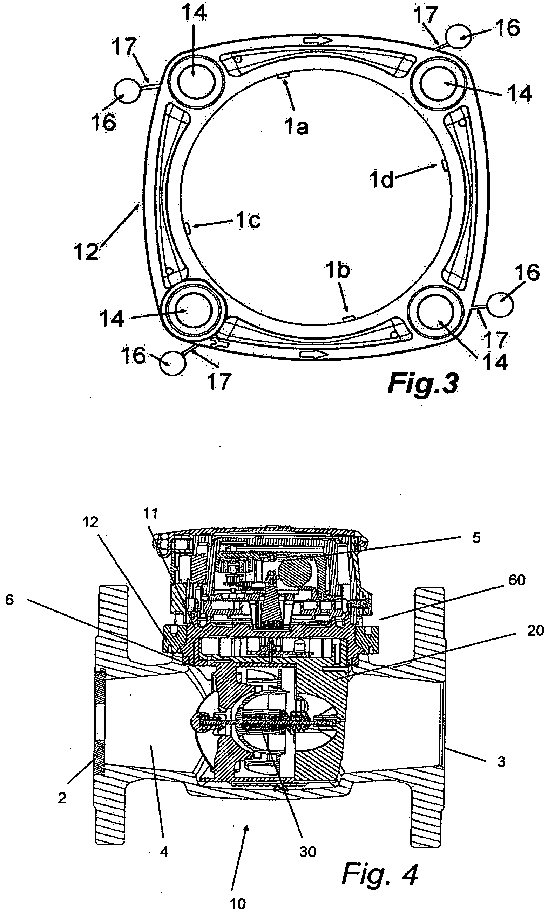

Die Figur 3 zeigt einen in einer Spritzgussform ähnlich der in Fig. 2 bzw. Fig. 6 dargestellten hergestellten Klemmring 12. Der Klemmring 12 besitzt vier kräftemäßig hoch beanspruchte Befestigungsöffnungen 14. Zur Herstellung der Befestigungsöffnungen 14 sind in der Hauptkavität 42 vier Kerne (in Fig. 2 bzw. Fig. 6 nicht dargestellt) erforderlich. Um eine möglichst gleichmäßige Füllung der Hauptkavität 42 zu erreichen, sind die vier Einspritzpunkte 1a, 1 b, 1 c, 1 d vorgesehen. Die hier eingespritzte Kunststoffschmelze umfließt die Kerne auf beiden Seiten, um sich auf der Rückseite zu vereinigen und dort die Bindenähte zu bilden, durch die es zu der bekannten Reduzierung der Festigkeit kommt, was im Bereich der Befestigungsöffnungen jedoch denkbar unerwünscht ist und durch die vier Extra-Kavitäten 46 verhindert wird.

Um das Durchströmen der Bindenaht zu ermöglichen, sind die Verbindungskanäle 47 gegenüber den in der Füllphase der Haupt-Kavität 42 auf Grund des Umströmens der Kerne sowie des Zusammenströmens von Material benachbarter Einspritzpunkte 1a, 1c; 1c, 1b; 1b, 1d; 1d, 1a entstehenden Bindenähten seitlich versetzt.

Durch diese Maßnahmen gelingt es, die Bindenähte in der Nachdrückphase, wenn die Kunststoffschmelze durch die Verbindungskanäle 47 in die Extra-Kavitäten 46 gedrückt wird, so zu durchströmen, dass die Festigkeit des fertigen Formkörpers 12 auch im Bereich der Befestigungsöffnungen 14 nur unwesentlich reduziert ist.

Die in den Extra-Kavitäten gebildeten Extra-Formkörper 16 und Stiele 17 werden vor der Weiterverwendung des Formkörpers 12 abgetrennt. Alternativ besteht die Möglichkeit, den Extra-Formkörpern 16 eine Form zu geben, die eine Weiterverwendung, z. B. als Typenschild, Handgriff oder dergleichen, möglich macht.

Fig. 4 zeigt einen Längsschnitt durch einen Turbinenzähler. Man erkennt ein Gehäuse 10 mit Einlass 2, Auslass 3 und einem zylindrischen, gegebenenfalls auch konischen Durchflusskanal 4. An der Oberseite besitzt das Gehäuse 10 eine Öffnung 6, die durch einen Druckdeckel 60 lösbar verschlossen ist. Über dem Druckdeckel 60 erkennt man ein Messwerk 5.

Unterhalb des Druckdeckels 60 befindet sich im Durchflusskanal 4 ein Halteeinsatz 20, der alle für die Verbrauchsmessung erforderlichen Komponenten trägt, insbesondere eine Turbine 30, die vom durchfließenden Fluid in Drehung versetzt wird und deren Drehungen mit Hilfe von Permanentmagneten durch den Druckdeckel 60 hindurch zum Messwerk 5 übertragen werden.

Wie in Fig. 5 zu erkennen ist, ist der Druckdeckel 60 zweiteilig ausgebildet und aus Kunststoff gespritzt. Er besteht aus einer Abdichtplatte 11 mit umlaufendem Randflansch 13 und einem separaten Klemmring 12 mit vier Befestigungsöffnungen 14. Dank der Aufteilung des herkömmlichen, einstückigen Druckdeckels in Abdichtplatte 11 und Klemmring 12 lässt sich jedes Teil unter optimalen Bedingungen aus Kunststoff spritzen.

Enthält der Kunststoff Verstärkungsfasern, um die Druckfestigkeit des zweiteiligen Druckdeckels 60 zu verbessern, so werden diese Verstärkungsfasern in der Nachdrückphase beim Durchströmen der Bindenähte mitgenommen und in Richtung der Extrakavitäten orientiert. Um die dadurch erreichte Zugfestigkeit insbesondere im Bereich der Befestigungsöffnungen ausnutzen zu können, ist der Randflansch 13 der Abdichtplatte 11 nach außen schräg abfallend ausgebildet (siehe Figur 5). Wird das Innere des Gehäuses 10 unter Druck gesetzt, so wirkt der Druck von unten gegen die Abdichtplatte 11, die den Druck über den Randflansch 13 auf den Klemmring 12 überträgt. Dabei wandelt die Schräge des Randflansches 13 die Druckkräfte in Zugkräfte um, die von den parallel orientierten Verstärkungsfasern optimal abgetragen werden.

## Patentansprüche

1. Verfahren zum Herstellen von ringförmigen, zug- oder druckbelasteten Formkörpern (12) aus Kunststoff unter Verwendung einer Spritzgussform (2) mit einer Haupt-Kavität (42), wobei in die Spritzgussform (2) zusätzlich zu der Haupt-Kavität (42) wenigstens eine Extra-Kavität (46) eingearbeitet ist, wobei die wenigstens eine Extra-Kavität (46) mit der Haupt-Kavität (42) über einen Verbindungskanal (47) verbunden ist, umfassend die Merkmale:
- die Haupt-Kavität (42) wird so mit Kunststoffschmelze gefüllt, dass sich in der Haupt-Kavität (42) in der Nähe des Verbindungskanals (47) zwischen der wenigstens einen Extra-Kavität (46) und der Haupt-Kavität (42) eine Bindenaht (40) bildet, wobei der Querschnitt des Verbindungskanals (47) so dimensioniert ist, dass während des Füllens der Haupt-Kavität (42) keine Kunststoffschmelze in die Extra-Kavität (46) strömt,
- der Fülldruck wird erhöht, bis Kunststoffschmelze in die Extra-Kavität (46) fließt; wobei die beim Füllen der Haupt-Kavität (42) entstandene Bindenaht (40) durchströmt wird,
- die Spritzgussform (2) wird geöffnet und der Formkörper (12) entnommen, **dadurch gekennzeichnet, dass** die Bindenaht seitlich versetzt zum Verbindungskanal gebildet wird.

2. Verfahren nach Anspruch 1, **dadurch gekennzeichnet, dass** die Bindenaht in einem Abschnitt des Formkörpers gebildet wird, der bei bestimmungsgemäßer Verwendung des Formkörpers in einem Bereich liegt, der mechanisch gering belastet ist.

3. Verfahren nach einem der Ansprüche 1 oder 2, **gekennzeichnet durch** das Merkmal:
- dass sich die Bindenaht (40) in der Nähe des Verbindungskanals (47) bildet, indem wenigstens ein Einspritzpunkt (1a) in der Spritzgussform (2) geeignet positioniert ist.

4. Verfahren nach einem der Ansprüche 1 oder 2, **gekennzeichnet durch** das Merkmal:
- dass sich die Bindenähte (40) in der Nähe der Verbindungskanäle (47) bilden, indem mehrere Einspritzpunkte (1a, 1b, 1c, 1d) in der Spritzgussform (2) geeignet positioniert sind.

5. Verfahren nach einem der Ansprüche 1 bis 4, **gekennzeichnet durch** das Merkmal:
- bei mehreren Einspritzpunkten (1a, 1b, 1c, 1d) werden diese so angesteuert, dass die Bindenähte (40) sich während des Einspritzens der Kunststoffschmelze neben den Verbindungskanälen (47) bilden und dass bei der anschließenden Druckerhöhung Kunststoffschmelze in die Extra-Kavitäten (46) fließt; wobei die beim Füllen der Haupt-Kavität (42) entstandenen Bindenähte (40) durchströmt werden.

6. Verfahren nach einem der Ansprüche 1 bis 5, **gekennzeichnet durch** das Merkmal:
- die in der Extra-Kavität (46) und dem Verbindungskanal (47) gebildeten Extra-Formkörper (16, 17) werden abgetrennt.

7. Armatur für unter Druck stehende Fluide insbesondere Wasser, umfassend einen Klemmring aus Kunststoff hergestellt nach einem Verfahren gemäß einem der Ansprüche 1 bis 6, **dadurch gekennzeichnet, dass** der Klemmring umfasst:
- Öffnungen (14) für Befestigungsvorrichtungen,
- wenigstens einen Anspritzpunkt (1a, 1 b, 1c, 1d) in der Nähe einer der Öffnungen (14)
- und wenigstens einen Extra-Formkörper (16) auf der vom Anspritzpunkt (1a, 1b, 1c, 1d) abgewandten Seite der Öffnung (14).

8. Armatur nach Anspruch 7, **gekennzeichnet durch** die Merkmale:
- die Armatur umfasst ein Gehäuse (10) mit einer Öffnung (6)
- und einen Druckdeckel (60), der die Öffnung (6) mit Befestigungsvorrichtungen lösbar verschließt, wobei
- der Druckdeckel (60)
- eine Abdichtplatte (11)
- und einen Klemmring (12), umfasst
- die Abdichtplatte (11) besitzt einen umlaufenden Randflansch (13),
- die Abdichtplatte (11) ist aus Kunststoff gespritzt,
- der Klemmring (12) klemmt die Abdichtplatte (11) auf das Gehäuse (10).

9. Armatur nach Anspruch 8, **gekennzeichnet durch** die Merkmale:
- der Randflansch (13) der Abdichtplatte (11) ist nach außen abgeschrägt,
- der Klemmring (12) ist dazu passend geformt.

## Claims

1. Method for producing annular moulded bodies (12) which are subjected to a tensile or compressive load and are formed of a plastics material using an injection mould (2) comprising a main cavity (42), at least one extra cavity (46) being incorporated in the injection mould (2) in addition to the main cavity (42), the at least one extra cavity (46) being connected to the main cavity (42) by a connecting duct (47), comprising the following features:
- the main cavity (42) is filled with polymer melt in such a way that a weld line (40) forms in the main cavity (42) in the vicinity of the connecting duct (47) between the at least one extra cavity (46) and the main cavity (42), the cross section of the connecting duct (47) being dimensioned such that, while the main cavity (42) is being filled, no polymer melt flows into the extra cavity (46),
- the filling pressure is increased until polymer melt flows into the extra cavity (46), the weld line (40) formed when filling the main cavity (42) being flowed through,
- the injection mould (2) is opened and the moulded body (12) removed, **characterised in that** the weld line is formed so as to be laterally offset with respect to the connecting duct.

2. Method according to claim 1, **characterised in that** the weld line is formed in a portion of the moulded body which, when the moulded body is used as intended, is positioned in a region which is under low mechanical load.

3. Method according to either claim 1 or claim 2, **characterised by** the feature:
- that the weld line (40) forms in the vicinity of the connecting duct (47), by means of at least one injection point (1a) being suitably positioned in the injection mould (2).

4. Method according to either claim 1 or claim 2, **characterised by** the feature:
- that the weld lines (40) form in the vicinity of the connecting ducts (47), by means of a plurality of injection points (1 a, 1 b, 1 c, 1 d) being suitably positioned in the injection mould (2).

5. Method according to any of claims 1 to 4, **characterised by** the feature:
- in the case of a plurality of injection points (1 a, 1 b, 1 c, 1 d), said injection points are actuated in such a way that the weld lines (40) form beside the connecting ducts (47) during the injection of the polymer melt and that, during the subsequent pressure increase, polymer melt flows into the extra cavities (46), the weld lines (40) formed when filling the main cavity (42) being flowed through.

6. Method according to any of claims 1 to 5, **characterised by** the feature:
- the extra moulded bodies (16, 17) formed in the extra cavity (46) and in the connecting duct (47) are cut off.

7. Valve for pressurised fluids, in particular water, comprising a clamping ring made of plastics material in accordance with a method according to any of claims 1 to 6, **characterised in that** the clamping ring comprises:
- openings (14) for fastening devices,
- at least one feed point (1 a, 1 b, 1 c, 1 d) in the vicinity of one of the openings (14),
- and at least one extra moulded body (16) on the side of the opening (14) facing away from the feed point (1a, 1b, 1c, 1d).

8. Valve according to claim 7, **characterised by** the features:
- the valve comprises a housing (10) having an opening (6)
- and a pressure cover (60) which releasably closes the opening (6) by means of fastening devices,
- the pressure cover (60) comprising
- a sealing plate (11)
- and a clamping ring (12),
- the sealing plate (11) has a circumferential edge flange (13),
- the sealing plate (11) is injection-moulded from plastics material,
- the clamping ring (12) clamps the sealing plate (11) onto the housing (10).

9. Valve according to claim 8, **characterised by** the features:
- the edge flange (13) of the sealing plate (11) is chamfered on the outside,
- the clamping ring (12) is formed so as to fit thereto.

## Revendications

1. Procédé de fabrication de corps moulés annulaires (12) en matière plastique soumis à des contraintes de traction ou de pression, en utilisant un moule (2) de coulée par injection pourvu d'une cavité principale (42), au moins une cavité supplémentaire (46) étant ménagée dans ledit moule (2) de coulée par injection, en plus de ladite cavité principale (42), ladite cavité supplémentaire (46) étant reliée à ladite au moins une cavité principale (42) par l'intermédiaire d'un canal de jonction (47),
incluant les caractéristiques suivantes :
- la cavité principale (42) est emplie de matière plastique en fusion d'une manière telle qu'une ligne de soudure (40) se forme dans la cavité principale (42), à proximité du canal (47) de jonction entre ladite cavité principale (42) et la au moins une cavité supplémentaire (46), la section transversale dudit canal de jonction (47) étant dimensionnée de telle sorte qu'aucune matière plastique en fusion n'afflue dans ladite cavité supplémentaire (46) au cours de l'emplissage de ladite cavité principale (42),
- la pression d'emplissage est accrue jusqu'à ce que de la matière plastique en fusion pénètre dans ladite cavité supplémentaire (46), la ligne de soudure (40), résultant de l'emplissage de ladite cavité principale (42), étant alors parcourue par un flux,
- le moule (2) de coulée par injection est ouvert, et le corps moulé (12) est prélevé, **caractérisé par le fait que** la ligne de soudure est formée avec décalage latéral par rapport au canal de jonction.

2. Procédé selon la revendication 1, **caractérisé par le fait que** la ligne de soudure est formée sur un tronçon du corps moulé qui, lorsque ledit corps moulé est utilisé conformément à sa destination, est situé dans une région faiblement soumise à des contraintes mécaniques.

3. Procédé selon l'une des revendications 1 ou 2, incluant la caractéristique suivante :
- la ligne de soudure (40) se forme à proximité du canal de jonction (47), au moins un point d'injection (1a) occupant alors un emplacement adéquat dans le moule (2) de coulée par injection.

4. Procédé selon l'une des revendications 1 ou 2, incluant la caractéristique suivante :
- les lignes de soudure (40) se forment à proximité des canaux de jonction (47), plusieurs points d'injection (1a, 1b, 1c, 1d) occupant alors des emplacements adéquats dans le moule (2) de coulée par injection.

5. Procédé selon l'une des revendications 1 à 4, incluant la caractéristique suivante :
- en présence de plusieurs points d'injection (1a, 1b, 1c, 1d), ces derniers sont commandés de façon telle que les lignes de soudure (40) se forment à côté des canaux de jonction (47) au cours de l'injection de la matière plastique en fusion, et que de la matière plastique en fusion pénètre dans les cavités supplémentaires (46) lors de l'accroissement de pression consécutif, les lignes de soudure (40), résultant de l'emplissage de la cavité principale (42), étant alors parcourues par un flux.

6. Procédé selon l'une des revendications 1 à 5, incluant la caractéristique suivante :
- les corps moulés (16, 17), formés dans la cavité supplémentaire (46) et dans le canal de jonction (47), font l'objet d'une séparation.

7. Robinetterie dévolue à des fluides sous pression, notamment à de l'eau, incluant une bague de coincement en matière plastique fabriquée selon un procédé conforme à l'une des revendications 1 à 6, **caractérisée par le fait que** la bague de coincement comprend :
- des orifices (14) destinés à des dispositifs de fixation,
- au moins un point d'injection (1a, 1b, 1c, 1d) à proximité de l'un desdits orifices (14)
- et au moins un corps moulé additionnel (16), du côté de l'orifice (14) pointant à l'opposé dudit point d'injection (1a, 1b, 1c, 1d).

8. Robinetterie selon la revendication 7, dotée des caractéristiques suivantes :
- ladite robinetterie comprend un carter (10) muni d'une ouverture (6),
- et un couvercle de pression (60) qui obture amoviblement ladite ouverture (6) avec des dispositifs de fixation, sachant que
- ledit couvercle de pression (60) inclut
- une plaque d'étanchement (11)
- et une bague de coincement (12),
- la plaque d'étanchement (11) comporte une collerette marginale périphérique (13),
- ladite plaque d'étanchement (11) est venue d'injection en matière plastique,
- ladite bague de coincement (12) coince ladite plaque d'étanchement (11) sur ledit carter (10).

9. Robinetterie selon la revendication 8, dotée des caractéristiques suivantes :
- la collerette marginale (13) de la plaque d'étanchement (11) est biseautée vers l'extérieur,
- la bague de coincement (12) présente une configuration adaptée en conséquence.
